# EUROPÄISCHE PATENTSCHRIFT

(11) **EP 2 603 879 B1**
(45) Veröffentlichungstag und Bekanntmachung des Hinweises auf die Patenterteilung: **04.03.2015**
(21) Anmeldenummer: 11745495.9
(22) Anmeldetag: 12.08.2011
(51) Int. Cl.: G06K 13/07, G06K 19/06, B25J 9/16, B25J 19/06, B25J 21/00

(54) **SYSTEM UND VERFAHREN ZUM BEARBEITEN VON SICHERHEITS- ODER IDENTIFIKATIONSGEGENSTÄNDEN**
SYSTEM AND METHOD FOR PROCESSING SECURITY OR IDENTIFICATION OBJECTS
SYSTÈME ET PROCÉDÉ DE TRAITEMENT D'OBJETS DE SÉCURITÉ OU D'IDENTIFICATION

(30) Priorität: 13.08.2010 DE 102010034167
(43) Veröffentlichungstag der Anmeldung: 19.06.2013
(73) Patentinhaber: Mühlbauer GmbH & Co. KG, 93426 Roding (DE)
(72) Erfinder: FRUEHAUF, Boris, 93426 Roding (DE)
(74) Vertreter: Schmidt, Steffen
(86) Internationale Anmeldenummer: PCT/EP2011/004080
(87) Internationale Veröffentlichungsnummer: WO 2012/019782

(56) Entgegenhaltungen:
- DE-A1- 19 617 661
- DE-A1-102006 019 785
- US-A- 5 479 581

## Beschreibung

### Hintergrund

Es wird ein System und ein Verfahren zum Bearbeiten von Sicherheits- oder Identifikationsgegenständen beschrieben. Sicherheits- oder Identifikationsgegenstände können Karten, wie zum Beispiel ID-Karten, EC-Karten, oder aber Ausweisdokumente, wie zum Beispiel Personalausweise, Reisepässe, Zutritts- und andere Berechtigungsdokumente sein.

Die Bearbeitung von Sicherheits- oder Identifikationsgegenständen erfolgt in der Regel in einer Fertigungsstraße. In einer Fertigungsstraße werden die Sicherheits- oder Identifikationsgegenstände seriell bearbeitet und geprüft. Auf einer Fördereinrichtung werden die zumindest noch nicht vollständig bearbeiteten Sicherheits- oder Identifikationsgegenstände einer ersten Bearbeitungsstation in der Fertigungsstraße zugeführt, dort bearbeitet und anschließend über die Fördereinrichtung einer weiteren Bearbeitungs- oder Kontrollstation, welche beispielsweise den zuvor bearbeiteten Sicherheits- oder Identifikationsgegenstand überprüft, zugeführt. Die Bearbeitung eines Sicherheits- oder Identifikationsgegenstands erfolgt daher in Abhängigkeit von der vorhergehenden Bearbeitung; d.h. nur wenn der vorherige Bearbeitungsschritt ausgeführt wurde, ist es möglich den nächsten Bearbeitungsschritt durchzuführen. Um bei einer solchen Bearbeitung zumindest den Durchsatz zu erhöhen, werden häufig mehrere Bearbeitungsstationen parallel angeordnet und diesen über parallele Transporteinrichtungen Sicherheits- oder Identifikationsgegenstände zugeführt.

Kommt es in einer solchen Fertigungsstraße zu einem Ausfall einer Bearbeitungs- oder Kontrollstation, muss die Bearbeitung unterbrochen werden. Es wird sowohl die Zufuhr von Sicherheits- oder Identifikationsgegenständen angehalten, als auch die einzelnen Bearbeitungs- und/oder Kontrollstationen. Erst wenn alle Stationen und Einrichtungen der Fertigungsstraße angehalten wurden, kann der zum Ausfall führende Fehler behoben werden. Beispielsweise ist es möglich, dass Druckeinrichtungen, welche Sicherheits- oder Identifikationsgegenstände mit einer Tinte bedrucken, verstopfen und diese Verstopfung behoben werden muss. Andererseits kann das Auswechseln eines Druckbandes oder eines einfachen Verschleißteils das Stoppen der Bearbeitung verursachen. Ist der Bearbeitungsprozess unterbrochen und sind alle Stationen und Einrichtungen angehalten worden, können erst dann die fehlerhaften Teile/Elemente oder Module ausgetauscht oder kontrolliert werden.

Aus Gründen der Sicherheit müssen bei einer Inspektion, Wartung oder Reparatur die Fertigungsstraße aber auch die Bearbeitungsstationen angehalten werden bzw. müssen diese auch von der Stromzufuhr getrennt werden, damit es zu keinerlei Verletzungen bei dem diese Arbeiten ausführenden Personal kommt.

Durch das Anhalten der Bearbeitung der Sicherheits- oder Identifikationsgegenstände können die in der Fertigungsstraße nur zu einem Teil bearbeiteten Sicherheits- oder Identifikationsgegenstände in den meisten Fällen nicht weiter verwendet werden. Ein Grund dafür ist, dass zum Beispiel bei dem Aufbringen von Klebstoffen diese aushärten, bis eine weitere Bearbeitung erfolgt. Eine Reparatur, vor allem wenn ein gesamtes Bearbeitungsmodul aus-gebaut werden muss, kann oft mehrere Stunden dauern. In dieser Zeit können in der Fertigungsstraße keine Sicherheits- oder Identifikationsgegenstände bearbeitet werden.

### Stand der Technik

Aus DE 37 81 239 T2, der Übersetzung der Europäischen Patentschrift EP 0 266 926 B1, ist eine Herstellung von personalisierten Identitätskarten bekannt. Hier wird ein System zur Personalisierung von I.C.-Mikrochip-Karten angegeben, welches sich an unterschiedliche Programmierzeiten der Mikrochips anpasst, ohne unannehmbare Unterbrechungen in dem Fluss der Karten durch das System zu verursachen. Das System umfasst dazu eine Vielzahl von in Folge angeordneten Stationen zur Programmierung der Karten mit persönlichen Daten, die in kreisförmiger Formation auf einem Drehtisch angeordnet sind. Der Drehtisch wird über einen in seiner Geschwindigkeit regelbaren Gleichstrommotor angetrieben und in nur einer Bearbeitungsrichtung gedreht. Das System weist ferner Mittel zum Zu- und Abführen der Karten auf. Diese sind ortsfest in unmittelbarer Nähe zu dem Drehtisch angeordnet. Bei dem Verfahren wird eine Karte durch das Zuführmittel einer Station zugeführt und anschließend der Drehtisch um eine Position weitergedreht, so dass einer benachbarten Station auf dem Drehtisch eine Karte zugeführt werden kann. Dadurch werden gleichzeitig mehrere Karten programmiert, und die unterschiedlichen Programmierzeiten der Mikrochips wirken sich nicht negativ auf den Gesamtdurchsatz aus. Neben der Zuführung, entgegengesetzt der Drehrichtung des Drehtisches, befindet sich eine Abführung, welche die Karten nach der Programmierung von den Stationen aufnimmt und abführt.

Die DE 101 10 414 A1 beschreibt ein Kartenpersonalisierungssystem und ein Verfahren zum Abarbeiten von Kartenpersonalisierungsaufträgen. Hier wird ein Kartenpersonalisierungssystem und ein Verfahren zur Abarbeitung mehrerer Kartenindividualisierungsaufträge beschrieben, das einen hohen Durchsatz ermöglicht und zudem auch für kleinere Aufträge mit hohem Durchsatz geeignet sind. Das System hat eine Transporteinrichtung, welche als Drehteller ausgebildet ist, und Bearbeitungsmodule, welche um den Drehteller herum angeordnet sind. Das System umfasst dabei zwei verschiedene Bearbeitungseinheiten. Bestimmte Module gehören zu der ersten Bearbeitungseinheit und andere bestimmte Module gehören zu der zweiten Bearbeitungseinheit. Die Module können in Abhängigkeit ihrer Bearbeitungseinheiten nebeneinander oder abwechselnd, d.h. ein Modul der zweiten Bearbeitungseinheit folgt immer einem Modul der ersten Bearbeitungseinheit, angeordnet werden. Die Module sind ortsfest angeordnet und die Übergabe der Karten erfolgt lediglich über den Drehteller, der in nur einer Drehrichtung bewegt werden kann. Dieser transportiert eine Karte von einem ersten Modul, welches ein Kartenmagazin der ersten Bearbeitungseinheit ist, zu einem Modul, welches eine Bearbeitungsstation der ersten Bearbeitungseinheit ist, und transportiert eine von dieser Station bearbeitete Karte zu einem weiteren Modul. Dieser Ablauf wird so lang fortgesetzt, bis alle Module und alle Bearbeitungsschritte abgearbeitet wurden und die Karten dem letzten Modul, welches ebenfalls ein Kartenmagazin ist, zugeführt wurden. Gleiches gilt für die zweite Bearbeitungseinheit. Dadurch können verschiedene Kartenaufträge parallel abgearbeitet werden. Durch das Auswechseln von Modulen kann das System an neue Aufträge angepasst werden.

Die DE 10 2006 019 785 A1 offenbart eine Vorrichtung zum aufeinanderfolgenden Transport einer Mehrzahl von in einer Reihe angeordneter GSM-Chipkarten zwischen mindestens einer Zuführbahn und einem senkrecht zur Ausrichtung der Zuführbahn verfahrbaren ersten Ablageelement mittels mindestens einer Übergabestation innerhalb einer Kartenbearbeitungsvorrichtung. Anspruch 1 ist gegenüber diesem Dokument abgegrenzt.

Die DE 196 17 661 A1 betrifft eine Übergabestation zum Überführen personalisierter Chipkarten von einer Transporteinrichtung in Magazine. Die Übergabestation hat zwischen der Transporteinrichtung und dem jeweils zu beschickenden Magazin einen Drehteller mit zwei Zwischenmagazinen, welche übereinander Aufnahmen für jeweils eine Chipkarte aufweisen und von denen jeweils gleichzeitig und durch Drehung des Drehtellers abwechselnd ein Zwischenmagazin sich in einer Übernahmestellung zum Übernehmen von Chipkarten von der Transporteinrichtung und das andere Zwischenmagazin sich in einer Übergabestellung zum Übergeben von Chipkarten zu dem Magazin befindet.

Die US 5,479,581 offenbart eine Aufbewahrungsbibliothek für Datenträger. Diese dient zum Lagern von Datenträgern, jedoch nicht zur Bearbeitung von Identifikationsgegenständen.

### Probleme des Stands der Technik

Variable Bearbeitungen von unterschiedlichen Sicherheits- oder Identifikationsgegenständen, die unterschiedliche Bearbeitungszeiten benötigen, sind aufgrund des genau abgestimmten Systems einer Fertigungsstraße nicht möglich.

Daher ist es nicht möglich, während des Betriebs Module oder Teile der Fertigungsstraße zu warten, reparieren oder auszubauen ohne Personen zu gefährden und Ausschussteile zu produzieren.

Zudem können Drehtischanordnungen nur begrenzt an neue Anforderungen angepasst werden. Insbesondere ist es kaum möglich, die Bearbeitungszeiten zu verändern, da diese durch die Drehtischgröße, die Anordnung der Zuführungen und Abführungen und die Rotationsgeschwindigkeit fest vorgegeben sind.

Variable Bearbeitungen von unterschiedlichen Sicherheits- und Identifikationsgegenständen, die unterschiedliche Bearbeitungszeiten benötigen, sind daher aufgrund des abgestimmten Aufbaus des Drehtischs und der Zu- und Abführungen, die zudem in eine Fertigungsstraß eingebettet sind, nicht möglich.

DE 37 81 239 T2 bietet zwar eine variable Bearbeitung bzw. Programmierzeit für Mikrochips von Karten, ist aber dennoch unflexibel. Pro Arbeitstakt, d.h. bei jedem Weiterdrehen des Drehtisches, wird eine Karte mit programmiertem Mikrochip abgegeben. Da aber die Programmierzeit für einzelne Mikrochips weit unter der Zeit bleibt, die der Drehtisch für eine Umdrehung bis zur Abgabe der Karten braucht, sind nicht alle Bearbeitungsstationen ausgelastet. Weiterhin ist es bei dem Verfahren und dem System aus DE 37 81 239 T2 nicht möglich eine Wartung, Reparatur oder Austausch von Teilen des Systems vorzunehmen, ohne den Betrieb des Systems einzustellen. Eine Wartung, Reparatur oder ein Austausch von Teilen des Systems ist während des Betriebs des Systems ohne eine Gefährdung von Personen nicht durchführbar.

Das in DE 101 10 414 A1 offenbarte Kartenpersonalisierungssystem und das Verfahren zum Abarbeiten von Kartenpersonalisierungsaufträgen bietet ebenfalls eine weitestgehend variable Bearbeitung, ist aber auch abhängig von der Bearbeitungszeit, da der Drehteller die Karten taktweise weitergibt. D.h. längere Wartezeiten des Drehtellers in einer Position können auftreten, so dass eine Karte nicht weitergegeben werden kann, wenn die vorher zu bearbeitende Karte noch nicht vollständig bearbeitet und von dem Modul auf den Drehteller abgelegt wurde. Dies ist bei DE 101 10 414 A1 zudem äußerst problematisch, da bei diesem Kartenpersonalisierungssystem, bei welchem die Module entweder abwechselnd, je nach Bearbeitungseinheit, oder aber auch die Modulblöcke nebeneinander, nach Bearbeitungseinheit, angeordnet sind. Das System verwendet einen gemeinsamen Drehteller, so dass die Bearbeitung unterschiedlicher Bearbeitungsaufträge der verschiedenen Bearbeitungseinheiten immer in Abhängigkeit von dem jeweils anderen erfolgt.

Zudem bietet DE 101 10 414 A1 keine Möglichkeit, dass ohne Gefährdung von Personen die Module oder andere Teile des Systems während des Betriebs ausgetauscht, gewartet oder repariert werden können. Es ist zwar möglich, die einzelnen Bearbeitungsmodule auszutauschen, da diese als Einheiten ausgebildet sind, doch muss die Bearbeitung unterbrochen und das System angehalten werden.

Weiterhin offenbaren die Dokumente des Stands der Technik DE 101 10 414 A1 und DE 37 81 239 T2 eine Weitergabe der Karten in nur einer Bearbeitungsrichtung. Deshalb kann die Bearbeitung der Karten nicht variabel erfolgen. Die gezeigten Systeme können auch nur mit einer Bearbeitungs-/Drehrichtung arbeiten, da bei DE 101 10 414 A1 eine variable Drehrichtung die Bearbeitung der Karten unmöglich machen würde, vor allem da zwei getrennte Bearbeitungseinheiten vorgesehen sind (Anordnung Kartenmagazine und Bearbeitungsmodule), und bei DE 37 81 239 T2 lediglich ein Kodiersystem gezeigt wird, welches nur für die Bearbeitung in einer Drehrichtung ausgelegt ist, und die bei zwei Drehrichtungen die ihr gestellte Aufgabe nicht lösen könnte.

Da die in den Dokumenten DE 37 81 239 T2 und DE 101 10 414 A1 beschriebenen Gegenstände kaum an neue Anforderungen angepasst werden können, können diese Gegenstände nur bedingt für die Bearbeitung von Kleinserien verwendet werden. Wenn zudem zwischen der Bearbeitung von unterschiedlichen Produktionslosen ein Umrüsten der Vorrichtung erforderlich ist, bedingt der in den Dokumenten DE 37 81 239 T2 und DE 101 10 414 A1 beschriebene Aufbau, dass die Vorrichtung während des Umrüstens stillsteht.

Aus anderen technischen Gebieten, zum Beispiel dem geordneten Aufbewahren von Datenträgern, ist bekannt, dass die Verwendung eines Roboterarms Bewegungen zwischen den einzelnen Aufbewahrungselementen ermöglicht. Allerdings unterliegen derartige Vorrichtungen grundsätzlich anderen Voraussetzungen. So wird zum Beispiel im Dokument US 5,479,581 ein Datenträgerlager beschrieben. Das Datenträgerlager umfasst mehrere sogenannte Bibliotheken, die Datenträgerlaufwerke, ein Karussell zur Aufnahme von Datenträgern und einen Linear-Roboterarm umfassen. Für den Austausch von Datenträgern zwischen den einzelnen Bibliotheken ist ein Rotations-Roboterarm vorgesehen. Neben den Datenträger-Lagerplätzen in den Karussellen sind zwischen den Bibliotheken weitere Lagerplätze für Datenträger vorgesehen.

Im Unterschied zu Sicherheits- oder Identifikationsgegenständen werden die Datenträger jedoch nicht bearbeitet. Stattdessen dient das Datenträgerlager der geordneten Aufbewahrung der Datenträger, wobei insbesondere die Zugriffszeit auf die Datenträger relevant ist. Entsprechend müssen weder Bearbeitungsreihenfolgen oder Bearbeitungszeiten berücksichtigt werden. Zudem müssen die Lagerplätze zum Aufnehmen der Datenträger und die Laufwerke nicht gewartet oder repariert werden, wie dies zum Beispiel bei einer Druckvorrichtung für einen Sicherheits- oder Identifikationsgegenstand der Fall wäre.

Der Stand der Technik zeigt somit keine Systeme, die, unter Gewährleistung der Sicherheit der das System bedienenden Personen, Sicherheits- oder Identifikationsgegenstände, wie bei den genannten Dokumenten des Stands der Technik Karten mit Mikrochips, variabel bearbeiten und stets eine optimierte Auslastung des Systems zur Verfügung stellen.

### Zugrunde liegende Aufgabe

Es ist daher Aufgabe, diese Nachteile des Stands der Technik zu beheben. Insbesondere soll ein System und ein Verfahren bereitgestellt werden, das eine variable Bearbeitung der Sicherheits- oder Identifikationsgegenstände ermöglicht. Zudem sollen die beispielsweise durch Wartungsarbeiten oder Reparaturen bedingten Stillstandstandzeiten reduziert werden. Die Erfindung ist Gegenstand der unabhängigen Ansprüche.

### Vorgeschlagene Lösung

Hierzu wird ein System vorgeschlagen, dass eine Übergabeeinrichtung aufweist, die einen Sicherheits- oder Identifikationsgegenstand aufnimmt und wieder abgibt, wobei der Sicherheits- oder Identifikationsgegenstand durch die Übergabeeinrichtung in einem mehrdimensionalen Raum bewegt wird. Eine Steuerung dient dazu die Übergabeeinrichtung zu steuern. Zudem hat das System zumindest ein Modul, in welchem die Sicherheits- oder Identifikationsgegenstände bevorratet, aufgenommen, bearbeitet oder kontrolliert werden. Das System umfasst weiter eine Einfassung mit einer zumindest teilweise geschlossenen Mantelfläche. Die Mantelfläche umgibt den Raum, in dem die Übergabeeinrichtung die Sicherheits- oder Identifikationsgegenstände bewegt. Dadurch sind der Raum, in dem die Sicherheits- oder Identifikationsgegenstände bewegt werden, und ein die Einfassung umgebender Raum räumlich voneinander getrennt. Die Mantelfläche der Einfassung weist Öffnungen auf, durch die die Übergabeeinrichtung die Sicherheits- oder Identifikationsgegenstände aus dem umgebenden Raum aufnimmt und , zum Beispiel durch eine andere Öffnung, wieder an den umgebenden Raum abgibt. Durch die Öffnungen der Einfassung erfolgt die Zu- und/oder Abführung der Sicherheits- oder Identifikationsgegenstände zu/von den Modulen.

Ein solches System ermöglicht die Bearbeitung von Sicherheits- oder Identifikationsgegenständen in einer variablen Reihenfolge, d.h. Abarbeiten der einzelnen Bearbeitungsschritte für jeden Sicherheits- oder Identifikationsgegenstand in einer unterschiedlichen Reihenfolge. Unterschiedliche Bearbeitungszeiten der einzelnen Sicherheits- oder Identifikationsgegenstände führen bei einem solchen System auch nicht dazu, dass ein Modul warten muss, bis es einen weiteren Sicherheits- oder Identifikationsgegenstand bearbeiten kann. Durch das Zu- und Abführen der Sicherheits- oder Identifikationsgegenstände durch die Übergabeeinrichtung, welche die Sicherheits- oder Identifikationsgegenstände frei von einem Bearbeitungsablauf zu und von den Modulen bewegt, können alle Module jederzeit mit Sicherheits-oder Identifikationsgegenständen versorgt werden.

Ein wesentlicher Vorteil dieses Systems liegt auch darin, dass die Übergabe der Sicherheits-oder Identifikationsgegenstände durch die Übergabeeinrichtung in einem von außerhalb dieses Raums nicht zugänglichen Raum erfolgt. Dadurch kann eine Wartung, Reparatur oder ein Austausch der Module bei laufenden Betrieb der Übergabeeinrichtung und während des Bearbeitungsprozesses stattfinden. Es wäre damit auch möglich, durch Hinzufügen und Entfernen der Module während des Betriebs des Systems, eine Umstellung von einer Art von Sicherheits- oder Identifikationsgegenständen, die bearbeitet werden sollen, auf eine andere durchzuführen. Ein wesentlicher Vorteil liegt zudem darin, dass Personen, die sich in der Nähe des Systems befinden oder an diesem arbeiten, keinerlei Gefährdung durch bewegliche Teile der Übergabeeinrichtung ausgesetzt sind.

Zudem ermöglicht die variable Zu- und Abführung der Sicherheits- oder Identifikationsgegenstände die gleichzeitige Bearbeitung unterschiedliche Sicherheits- oder Identifikationsgegenstände in dem System. So können Sicherheits-oder Identifikationsgegenstände eines ersten Produktionsloses, also Sicherheits- oder Identifikationsgegenstände die die gleichen Bearbeitungsschritte durchlaufen, unabhängig von den Sicherheits- oder Identifikationsgegenständen eines zweiten Produktionsloses, also Sicherheits- oder Identifikationsgegenstände die zumindest einen anderen Bearbeitungsschritt durchlaufen, in dem System bearbeitet werden. Dafür kann in dem System eine erste Modulgruppe zum Bearbeiten des ersten Produktionsloses und eine zweite Modulgruppe zum Bearbeiten des zweiten Produktionsloses vorgesehen sein. Entsprechend können mit dem System unterschiedliche Produktionslose parallel, also unabhängig voneinander bearbeitet werden. Je nach Auslastung der einzelnen Module, können auch Module zur Bearbeitung des ersten und des zweiten Produktionsloses vorgesehen sein. So kann zum Beispiel für zeitlich kurze Bearbeitungsschritte ein gemeinsames Modul für das erste und zweite Produktionslos vorgesehen sein, während für zeitlich lange Bearbeitungsschritte zwei oder mehrere separate Module vorgesehen sind. Ferner ist es möglich, dass die erste Modulgruppe gewartet wird oder für eine drittes Produktionslos umgerüstet wird, während die zweite Modulgruppe Sicherheits- oder Identifikationsgegenstände bearbeitet.

Durch das System zum Bearbeiten von Sicherheits- oder Identifikationsgegenständen können die Sicherheits- oder Identifikationsgegenstände variabel, d.h. sowohl in der Bearbeitungsreihenfolge als auch in der Bearbeitungsdauer, bearbeitet werden, und ein Austausch, ein Hinzufügen oder ein Entfernen von Bearbeitungsmodulen während des Betriebs des Systems und der Bearbeitung der Sicherheits- oder Identifikationsdokumente kann, ohne dass ein Risiko für Personen besteht, bewegliche Teile für Menschen zugänglich sind und/oder Ausschuss produziert wird, erfolgen. Darüber hinaus eignet sich das System auch für Aufträge mit einer geringeren Zahl von zu bearbeitenden Sicherheits- oder Identifikationsgegenständen und ermöglicht eine effiziente Bearbeitung der Sicherheits- oder Identifikationsgegenstände. Außerdem besticht ein solches System durch eine einfache und platzsparende Gestaltung.

In einer Ausführung des Systems weist die Einfassung Aufnahmen zur Aufnahme und Halterung der Module auf, die auf der der Übergabeeinrichtung gegenüber liegenden Seite angeordnet sind und sich im die Einfassung umgebenden Raum befinden.

Die Übergabeeinrichtung des Systems ist in einer Ausführung dazu ausgebildet, das Vorhandensein von Modulen an den Öffnungen der Einfassung mittels geeigneter Erkennungseinrichtungen zu erkennen. Es erfolgt damit eine automatische Identifizierung der Module. Die Module werden somit auch automatisch in die Bearbeitung integriert.

Eine Ausführungsvariante sieht vor, dass mehrere Module zur Aufnahme, Bevorratung, Bearbeitung und Kontrolle von Sicherheits- oder Identifikationsgegenständen an unterschiedlichen Öffnungen der Einfassung angeordnet sind. Bei der Anordnung mehrerer Module an der Einfassung ergibt sich ein kompaktes System. Dieses benötigt weniger Raum als bekannte Fertigungsstraßen.

In einer weiteren Ausführung umfasst das System eine Schnittstelleneinrichtung, die mit der Steuerung der Übergabeeinrichtung und den Modulen in Verbindung steht. Durch die Schnittstelleneinrichtung können die Übergabeeinrichtung und die Module gesteuert werden. Damit können während des Betriebs des Systems Änderungen in der Bearbeitung vorgenommen werden. Die Zu- und Abführung der Sicherheits- oder Identifikationsgegenstände zu den jeweiligen Modulen wird durch die automatische Identifizierung der Module unterstützt.

Zudem können mehrere gleiche Module, die dieselben Bearbeitungsschritte ausführen, an der Einfassung angebracht sein. Bei Ausfall eines Moduls wird der Sicherheits- oder Identifikationsgegenstand automatisch an ein an anderer Stelle angeordnetes Modul, welches dieselben Bearbeitungsschritte durchführt, übergeben. Auch dies erfolgt weitgehend automatisch, da das Vorhandensein von Modulen erkannt wird.

Die an der Einfassung des Systems angebrachten Module sind auch während des Betriebs der Übergabeeinrichtung von der Einfassung lösbar. Dadurch können Module jederzeit ausgetauscht oder das System umgebaut werden.

Die Einfassung weist in einer weiteren Ausführung relativ zu einer Öffnung, durch welche ein Sicherheits- oder Identifikationsgegenstand von einem Modul zu der Übergabeeinrichtung oder umgekehrt bewegt wird, mindestens eine weitere Öffnung auf, durch die ein Sicherheits- oder Identifikationsgegenstand von der Übergabeeinrichtung zu dem einen Modul oder umgekehrt bewegt wird.

Die Module können ebenfalls von der Steuerung gesteuert werden.

Die Grundfläche der Einfassung weist in einer Ausführungsvariante eine runde Form auf. Beispielsweise bildet die Grundfläche die Form eines Kreises.

In einer weiteren Ausführungsvariante weist die Grundfläche der Einfassung die Form eines geschlossenen Polygons auf. Die Grundfläche der Einfassung kann dabei die Form eines Quadrats aufweisen. Zudem ist es möglich, dass die Grundfläche die Form eines Rechtecks hat. Auch die Form eines Dreiecks, sowohl gleichseitig als auch gleichschenklig oder andere Dreiecksformen sind denkbar. In weiteren Ausführungsformen weist die Grundfläche der Einfassung die Form eines gleichseitigen Vielecks mit einer geraden Anzahl an Ecken, wie zum Beispiel sechs, acht, zehn oder zwölf Ecken, auf. Ebenso kann die Grundfläche der Einfassung die Form eines gleichseitigen Vielecks mit einer ungeraden Anzahl an Ecken aufweisen, beispielsweise fünf, sieben, neun oder elf Ecken. Auch weist die Grundfläche der Einfassung in weiteren anderen Ausführungsformen unterschiedliche Seitenlängen auf. Beispielsweise hat die Grundfläche der Einfassung bei einem geschlossenen Polygon eine Seite mit einer bestimmten Länge, welche zwischen zwei Seiten des geschlossenen Polygons liegt, die eine größere Länge als die bestimmte Seitenlänge aufweisen. Diese Anordnung wird bei dieser Ausführung fortgesetzt, so dass eine kürzere Seite immer einer längeren Seite folgt. Andere Ausführungsformen der Grundfläche sind aber ebenfalls möglich.

Die Einfassung des Systems weist in weiteren Ausführungsformen senkrechte Wände auf. Darüber hinaus können die Seitenwände aber auch geneigt ausgebildet sein.

In einer Ausführungsvariante hat die Einfassung eine schließbare Öffnung. Diese kann in dem Bereich, der sich nahe der Grundfläche der Einfassung befindet, angeordnet sein. Die schließbare Öffnung dient dazu, an die Übergabeeinrichtung zu gelangen, um Wartungsarbeiten durchzuführen, oder aber auch dazu, um fehlerhafte Sicherheits- oder Identifikationsgegenstände, die von der Übergabeeinrichtung fallengelassen oder von den Modulen ausgeworfen wurden, aus dem Raum, in dem die Sicherheits- oder Identifikationsgegenstände bewegt werden, zu entfernen. In einer Ausführung weist die Einfassung zwei schließbare Öffnungen auf, hinter denen, im Raum in dem die Sicherheits- oder Identifikationsgegenstände bewegt werden, Behälter angeordnet sind. Dadurch kann während des Betriebs der Übergabeeinrichtung ein Behälter entleert werden, während die Übergabeeinrichtung oder die Module die fehlerhaften Sicherheits- oder Identifikationsgegenstände in den jeweils anderen Behälter ablegen oder auswerfen. Eine geeignete Einrichtung erkennt dabei auch das Vorhandensein der Behälter und steuert die Übergabeeinrichtung und die Module so, dass bei Fehlen eines Behälters, fehlerhafte Sicherheits- oder Identifikationsgegenstände in den jeweils anderen abgegeben werden.

Die Gestalt der Öffnungen der Einfassung, durch welche die Sicherheits- oder Identifikationsgegenstände hindurch bewegt werden, entspricht in weiteren Ausführungsformen annähernd der Gestalt eines Sicherheits- oder Identifikationsgegenstandes.

Die Module sind in weiteren Ausführungsformen Kartenmagazine, Kodierstationen, in welchen ein Chip eines Sicherheits- oder Identifikationsgegenstandes kodiert wird, Kodierstationen, in welchen ein Magnetstreifen eines Sicherheits- oder Identifikationsgegenstandes kodiert wird, Präge-, Stanz-, und/oder Schneidestationen, in welchen ein Sicherheits- oder Identifikationsgegenstand mit haptisch erfassbaren Merkmalen versehen wird, Druckstationen, in welchen ein Sicherheits- oder Identifikationsgegenstand bedruckt wird, und/oder Kontrollstationen, in welchen die Sicherheits- oder Identifikationsgegenstände vor, nach und/oder während ihrer Bearbeitung auf Fehler überprüft werden.

In anderen Ausführungsformen bilden mehrere Systeme einen Systemverbund, in dem mehrere Systeme über Transportvorrichtungen miteinander verbunden sind, so dass Sicherheits-oder Identifikationsgegenstände von einem System zu einem anderen System übergeben werden und eine Bearbeitung in mehreren Systemen erfolgt.

Bei einem Verfahren zum Bearbeiten von Sicherheits- oder Identifikationsgegenständen wird ein Sicherheits- oder Identifikationsgegenstand durch eine Übergabeeinrichtung von einem Modul, in welchem der Sicherheits- oder Identifikationsgegenstand vorrätig gehalten wird, entnommen. Der Sicherheits- oder Identifikationsgegenstand wird dann durch die Übergabeeinrichtung einem weiteren Modul, in welchem ein erster Bearbeitungsschritt erfolgt, zugeführt. Der Sicherheits- oder Identifikationsgegenstand wird nach dem ersten Bearbeitungsschritt von der Übergabeeinrichtung von dem weiteren Modul aufgenommen und anderen weiteren Modulen zugeführt, in welchen zumindest ein zweiter Bearbeitungsschritt erfolgt. Der abschließend bearbeitete Sicherheits- oder Identifikationsgegenstand wird anschließend durch die Übergabeeinrichtung einem Modul, in welchem der Sicherheits- oder Identifikationsgegenstand aufgenommen wird, zugeführt. Der Sicherheits- oder Identifikationsgegenstand wird bei diesem Verfahren durch die Übergabeeinrichtung in einem mehrdimensionalen Raum, der von einer Einfassung mit einer zumindest teilweise geschlossenen Mantelfläche umgeben ist, bewegt, und durch die Übergabeeinrichtung in einen die Einfassung umgebenden Raum, in dem die Module angeordnet sind, durch Öffnungen in der Mantelfläche der Einfassung den Modulen zugeführt und/oder von den Modulen abgeführt. Dabei erfolgen die Bearbeitungsschritte in einer vorher festgelegten Reihenfolge, oder zumindest ein Bearbeitungsschritt ist festgelegt und die anderen Bearbeitungsschritte erfolgen variabel, oder sämtliche Bearbeitungsschritte erfolgen in einer variablen Reihenfolge. In einem seriellen Prozess würde der Sicherheits- oder Identifikationsgegenstand ein Modul, welches für die Bearbeitung nicht erforderlich ist, durchlaufen. Dabei wird der Sicherheits- oder Identifikationsgegenstand unnötig verschmutzt und einem Verschleiß ausgesetzt. Das beschriebene System und das Verfahren hingegen führen Sicherheits- oder Identifikationsgegenstände nur Modulen zu, in welchen eine Bearbeitung erfolgt.

In den Bearbeitungsschritten können die Sicherheits- oder Identifikationsgegenstände bearbeitet und / oder kontrolliert werden.

Durch das Verfahren zum Bearbeiten von Sicherheits- oder Identifikationsgegenständen können die Sicherheits- oder Identifikationsgegenstände variabel, d.h. sowohl in der Bearbeitungsreihenfolge als auch in der Bearbeitungsdauer, bearbeitet werden, und ein Austausch, ein Hinzufügen oder ein Entfernen von Bearbeitungsmodulen während des Betriebs des Systems und der Bearbeitung der Sicherheits- oder Identifikationsdokumente kann, ohne dass ein Risiko für Personen besteht, bewegliche Teile für Menschen zugänglich sind und/oder Ausschuss produziert wird, erfolgen. Durch das Verfahren können auch Aufträge mit einer geringeren Zahl von zu bearbeitenden Sicherheits- oder Identifikationsgegenständen effizient abgearbeitet werden.

Bei dem Verfahren kann ein erster Sicherheits- oder Identifikationsgegenstand eines ersten Produktionsloses unabhängig von einem zweiten Sicherheits- oder Identifikationsgegentand eines zweiten Produktionsloses bearbeitet werden. Die Bearbeitung des ersten und zweiten Sicherheits- oder Identifikationsgegenstands kann dabei parallel erfolgen.

Bei einem Verfahren erfolgt zuerst ein Testlauf mit einer bestimmten Zahl von Sicherheits-oder Identifikationsgegenständen. Die Bearbeitungs-/Kontrollzeiten werden dabei aufgenommen, und anhand der aufgenommenen Bearbeitungs-/Kontrollzeiten wird die Bearbeitungszeit ermittelt.

Das Vorhandensein von Modulen an der Einfassung wird bei einem Verfahren mittels geeigneter Erkennungsvorrichtungen erkannt.

Bei einem weiteren Verfahren übergibt die Übergabeeinrichtung bei Fehlen eines Moduls den Sicherheits- oder Identifikationsgegenstand an ein an anderer Position befindliches Modul, welches dieselben Bearbeitungs-/Kontrollschritte durchführt.

Bei einem Verfahren wird zumindest in einem Bearbeitungs-/Kontrollschritt ein Chip eines Sicherheits- oder Identifikationsgegenstandes kodiert, ein Magnetstreifen eines Sicherheits-oder Identifikationsgegenstandes kodiert, ein Sicherheits- oder Identifikationsgegenstand bedruckt, ein Sicherheits- oder Identifikationsgegenstand mit haptischen Merkmalen versehen, und/oder ein Sicherheits- oder Identifikationsgegenstand vor, nach und/oder während seiner Bearbeitung auf Fehler überprüft.

### Kurze Beschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen. Die Abmessungen und Proportionen der in den Fig. gezeigten Komponenten sind hierbei nicht unbedingt maßstäblich; sie können bei zu implementierenden Ausführungsformen vom Veranschaulichten abweichen.
Fig. 1 zeigt schematisch die Draufsicht auf die Übergabeeinrichtung und die Einfassung eines Systems.
Fig. 2 zeigt schematisch eine perspektivische Ansicht einer Übergabeeinrichtung und einer Einfassung eines Systems.
Fig. 3a zeigt schematische die perspektivische Ansicht einer Einfassung mit einer runden Grundfläche.
Fig. 3b zeigt schematisch die perspektivische Ansicht einer Einfassung mit einer dreieckigen Grundfläche.
Fig. 3c zeigt schematisch die perspektivische Ansicht einer Einfassung mit einer quadratischen Grundfläche.
Fig. 3d zeigt schematisch die perspektivische Ansicht einer Einfassung mit einer rechteckigen Grundfläche.
Fig. 4a zeigt schematisch die Draufsicht auf einen Ausschnitt einer Einfassung mit einer Öffnung.
Fig. 4b zeigt schematisch die perspektivische Ansicht eines Ausschnitts einer Einfassung mit Öffnung und einem sich in der Öffnung befindlichen Sicherheits- oder Identifikationsgegenstand.
Fig. 4c zeigt schematisch eine Draufsicht auf einen Ausschnitt einer Einfassung mit einer runden Grundfläche und einen sich in einer Öffnung der Einfassung befindlichen Sicherheits-oder Identifikationsgegenstand.
Fig. 5 zeigt schematisch eine perspektivische Ansicht einer Einfassung mit Öffnungen und einer Schnittstelleneinrichtung.
Fig. 6 zeigt schematisch eine perspektivische Ansicht eines Systems zum Bearbeiten eines Sicherheits- oder Identifikationsgegenstandes.
Fig. 7 zeigt schematisch eine Draufsicht auf einen Systemverbund.

### Ausführliche Beschreibung der Ausführungsvarianten

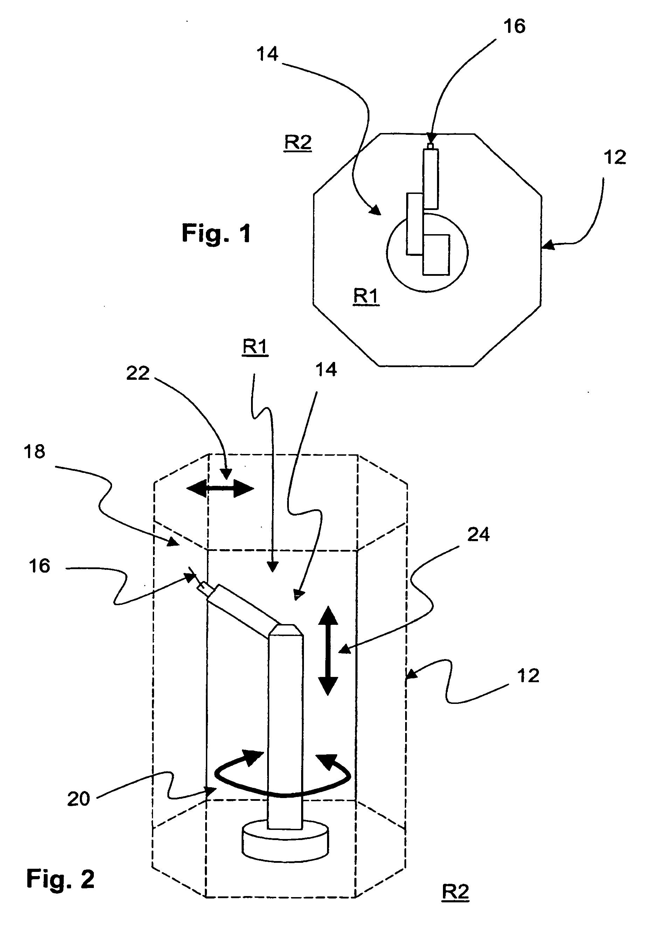

In der nachfolgenden Beschreibung werden Systeme 10 zum Bearbeiten von Karten 18 dargestellt. Die hier beschriebenen Karten 18 gehören ebenso zu den Sicherheits- oder Identifikationsgegenständen 18, weswegen für beide Begriffe dasselbe Bezugszeichen (18) verwendet wird. In Fig. 1 ist eine Übergabeeinrichtung 14 und eine achteckige Einfassung 12 eines Systems 10 zum Bearbeiten von Sicherheits- oder Identifikationsgegenständen 18 bzw. Karten 18 dargestellt. Die Einfassung 12 umgibt den Raum R1, in welchem die Karten 18 von einer Übergabeeinrichtung 14, die in diesem Beispiel ein mehrachsiger Roboter ist, bewegt werden. Der mehrachsige Roboter hat an seinem Arbeitsende einen Greifer 16, welcher dazu ausgebildet ist, Karten 18 aufzunehmen, wieder abzugeben und dabei in dem Raum R1 zu bewegen. Die Übergabeeinrichtung 14 kann auch eine andere Vorrichtung sein, die dazu ausgebildet ist, Karten 18 aufzunehmen, in dem mehrdimensionalen Raum R1 zu bewegen und wieder abzugeben. Beispielsweise ist die Übergabeeinrichtung 14 ein in drei Richtungen verfahrbarer Tisch, ein vertikal und rotatorisch frei verfahrbarer Drehteller oder eine Einrichtung mit mehreren Verteilerarmen. Alle Übergabeeinrichtungen 14 sind in der Lage, Karten 18 von Modulen 32 (in Fig. 1 nicht dargestellt), welche an der Einfassung 12 angebracht sind und sich im Raum R2 befinden, aufzunehmen und an ein anderes Modul 32 abzugeben. Die Module 32 befinden sich an den Außenwänden der Einfassung 12 im Raum R2. Sie können dabei in unterschiedlicher Höhe angebracht sein, so dass die Übergabeeinrichtungen 14 die Karten 18 sowohl horizontal als auch vertikal in dem ganzen Raum R1 bewegen müssen.

Ein Kartenpuffer (nicht dargestellt) kann zwischen der Übergabeeinrichtung 14 und einem Modul 32 oder an der Übergabeeinrichtung 14 angeordnet sein. Die Übergabeeinrichtung 14 hat dadurch mehrere Karten 18 zur Weitergabe vorrätig. Die Karten 18 sind zum Teil zumindest teilweise bearbeitete Karten 18 oder nicht bearbeitete Karten 18 aus dem Kartenmagazin. Ein Raum R2 umgibt die Einfassung 12 und ist durch die Einfassung 12 räumlich von Raum R1 getrennt. Durch diese Trennung ist es für Personen, die sich im Raum R2 befinden, nicht möglich, in den Raum R1 zu greifen oder von beweglichen Teilen, zum Beispiel von der Übergabeeinrichtung 14, erfasst zu werden.

In Fig. 2 ist schematisch die perspektivische Ansicht einer Übergabeeinrichtung 14 und einer sechseckigen Einfassung 12 eines Systems 10 dargestellt. Die Einfassung 12 ist zur besseren Darstellung der Übergabeeinrichtung 14 gestrichelt dargestellt. In dieser Darstellung ist zu erkennen, dass die Übergabeeinrichtung 14 die Karten 18 innerhalb des Raumes R1 bewegt. Die Pfeile 20, 22 und 24 deuten die Bewegung der Übergabeeinrichtung 14, und die Bewegung der von einem Greifer 16 der Übergabeeinrichtung 14 gehaltenen Karte 18 an. Die Einfassung 12 trennt den Raum R1, in dem die Karten 18 von der Übergabeeinrichtung 14 bewegt werden, räumlich von dem Raum R2, der die Einfassung 12 umgibt. Die Einfassung 12 umschließt in der gezeigten Ausführung nur den Raum R1. Die Grundfläche der Einfassung 12 kann in diesem Ausführungsbeispiel ebenfalls geschlossen ausgebildet sein, so dass sie den Raum R1 von dem Raum R2 trennt. Die Deckfläche der Einfassung 12 hingegen muss in diesem Ausführungsbeispiel nicht geschlossen sein; d.h. dass der Raum R1 und der Raum R2 an der Stelle der Deckfläche der Einfassung 12 nicht räumlich voneinander getrennt sein müssen.

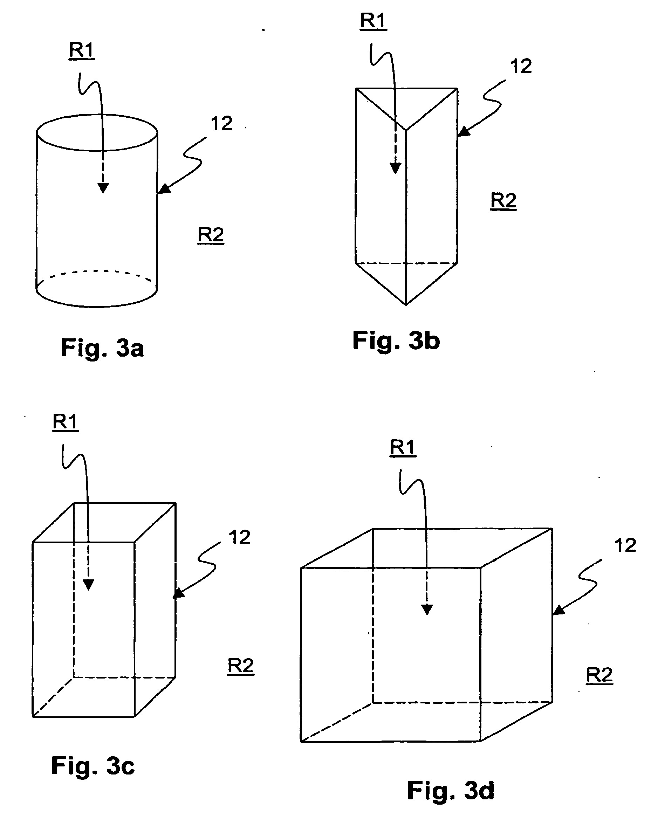

In den Fig. 3a bis d sind beispielhaft verschiedene Ausgestaltungen der Einfassung 12 dargestellt. Die gezeigten Ausführungsbeispiele sind lediglich schematisch dargestellt. Die Einfassung 12 in Fig. 3a weist eine runde, kreisförmige Grundfläche und eine dazu senkrechte Mantelfläche auf. Fig. 3b zeigt eine Ausführung der Einfassung 12 mit einer dreieckigen Grundfläche und einer dazu senkrechten Mantelfläche. Die Fig. 3c und Fig. 3d zeigen eine Einfassung 12 mit einer rechteckigen Grundfläche und einer dazu senkrechten Mantelfläche. Die Grundfläche der Einfassung 12 in Fig. 3c ist quadratisch.

Bei allen gezeigten beispielhaften Ausführungsformen der Einfassung 12, wird der Raum R1 von dem Raum R2 zumindest durch die Mantelfläche der Einfassung 12 räumlich getrennt. Die Deckfläche der Einfassung 12 trennt den Raum R1 von dem Raum R2 somit nicht räumlich. Da im Betrieb des Systems 10, dieses in den gezeigten Beispielen auf der Grundfläche der Einfassung 12 steht, ist der Raum R1 allein durch die Mantelfläche der Einfassung 12 ausreichend getrennt von dem Raum R2.

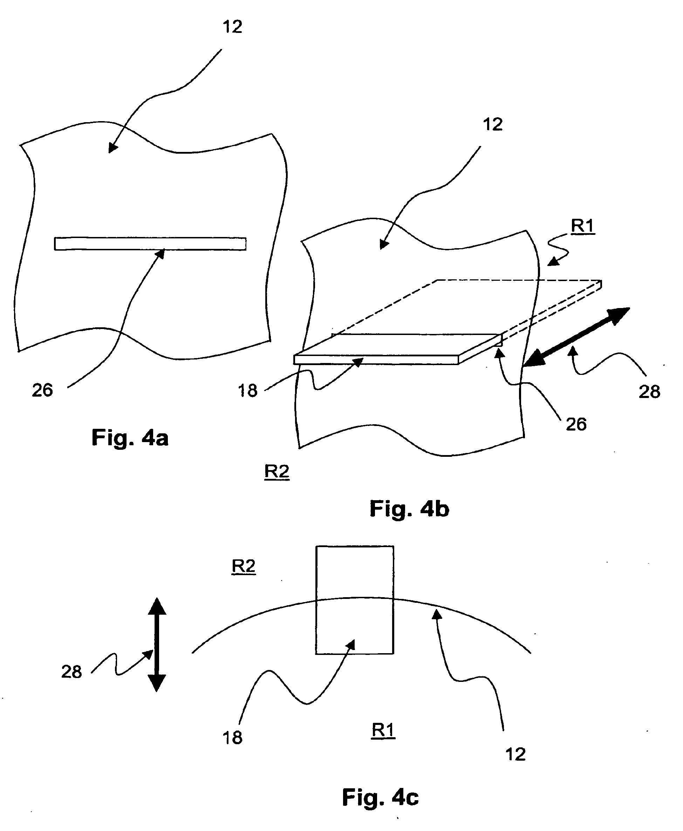

Fig. 4a zeigt einen Ausschnitt der Einfassung 12. In diesem Ausschnitt befindet sich eine Öffnung 26, durch welche die Karten 18 zwischen den beiden Räumen R1 und R2 bewegt werden. Die Öffnung 26 ist so geformt, dass eine Karte 18 durch die Öffnung 26 hindurch bewegt werden kann. Befindet sich eine Karte 18 in der Öffnung 26, so ist der Abstand zwischen den Oberflächen der Karte 18 zu dem die Öffnung 26 begrenzenden Umfang der Öffnung 26 nur so groß, dass die Karte 18 hindurchbewegt werden kann.

In Fig. 4b ist perspektivisch ein Ausschnitt der Einfassung 12 mit einer Öffnung 26 dargestellt. In der Öffnung 26 befindet sich eine Karte 18, die durch die Öffnung 26 von dem Raum R1 in den Raum R2 oder umgekehrt bewegt werden kann. Der Pfeil 28 zeigt die Bewegungsrichtung der Karte 18 an. In dieser Darstellung ist ersichtlich, dass die Karte 18 nicht an dem Rand bzw. dem Umfang der Öffnung 26 anliegt. Die Karte 18 wird ohne die Einfassung 12 zu berühren durch die Öffnung 26 hindurchbewegt. In anderen Ausführungsformen des Systems 10 berühren die Karten 18 bei dem Hindurchbewegen die Einfassung 12 und werden somit bei der Übergabe von der Einfassung 12 zumindest teilweise gelagert.

Die Öffnungen 26 der Einfassung 12 können jedoch so ausgestaltet sein, dass sämtliche, für eine Bearbeitung in diesem System 10 vorgesehenen Sicherheits- oder Identifikationsgegenstände 18, hindurch bewegt werden können. Auch kann die Einfassung 12 verschiedene Öffnungen 26 aufweisen, die der jeweiligen Form und Gestalt der Sicherheits- oder Identifikationsgegenstände 18 entsprechen. Die Übergabeeinrichtung 14 und die Module 32 übergeben dann die Sicherheits- oder Identifikationsgegenstände 18 nur durch die den jeweiligen Sicherheits- oder Identifikationsgegenständen entsprechenden Öffnungen 26.

Fig. 4c zeigt schematisch die Draufsicht auf einen Ausschnitt einer Einfassung 12 mit einer runden Grundfläche und einer sich in einer Öffnung 26 der Einfassung 12 befindlichen Karte 18. Die Karte 18 wird durch die Öffnung 26 (in Fig. 4c nicht dargestellt) von dem Raum R1 in den Raum R2 oder umgekehrt bewegt. Die möglichen Bewegungsrichtungen der Karte 18 gibt ein Pfeil 28 an.

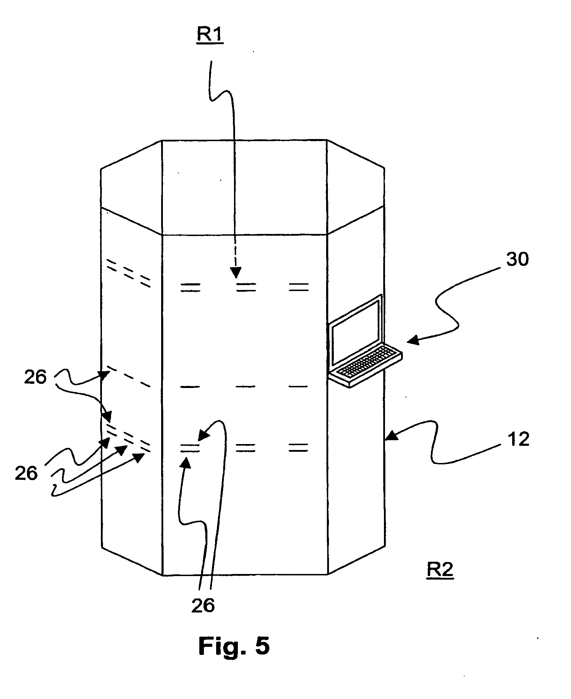

In Fig. 5 ist eine Einfassung 12 mit einer an der Einfassung 12 angebrachten Schnittstelleneinrichtung 30 dargestellt. Zudem weist die Einfassung 12 Öffnungen 26 auf. Die Schnittstelleneinrichtung 30 besteht bei Fig. 5 aus einer Tastatur, über die das Bedienpersonal die Steuerung der Übergabeeinrichtung 14 und der Module 32 (beide in Fig. 5 nicht dargestellt) ändern und eingeben kann, einem Bildschirm, der Informationen anzeigt, und einer Steuereinheit der Schnittstelleneinrichtung 30. Die Öffnungen 26 sind an bestimmten Positionen der Einfassung 12 angeordnet. An den Positionen der Öffnungen 26 werden die Module 32 angebracht. Die Karten 18 werden dann im Betrieb des Systems 10 von der Übergabeeinrichtung 14 über die Öffnungen 26 direkt den Modulen 32 zugeführt, welche die Karten nach der Bearbeitung und/oder Kontrolle über die Öffnungen 26 wieder an die Übergabeeinrichtung 14 abgeben.

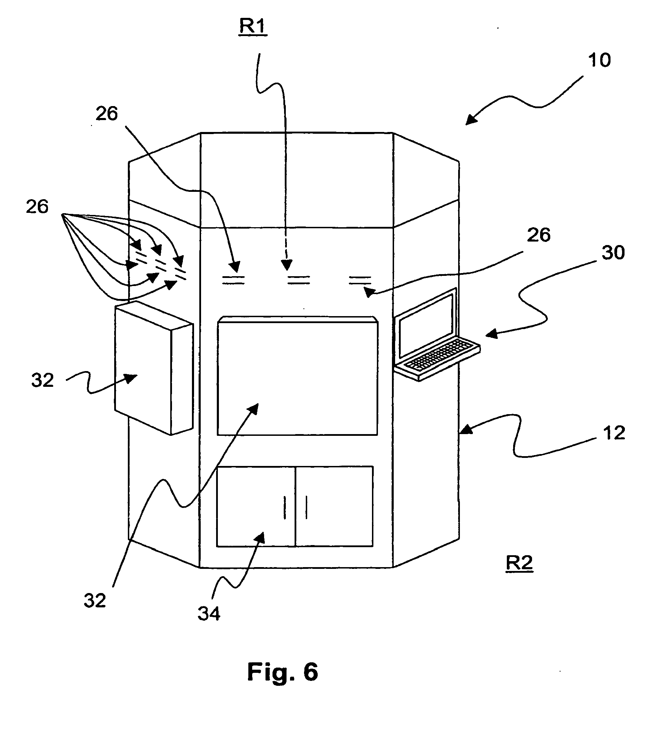

Ein System 10 einer Ausführungsvariante wird in Fig. 6 dargestellt. Dieses umfasst eine Einfassung 12 mit Öffnungen 26, durch welche Karten 18 zu Modulen 32 und von den Modulen 32 weg, durch die Übergabeeinrichtung (in Fig. 6 nicht dargestellt) übergeben werden. Die Module 32 sind an der Mantelfläche der Einfassung 12 im Raum R2 angeordnet. Die Module 32 befinden sich an den Öffnungen 26 der Einfassung 12, so dass die Karten 18 durch die Öffnungen 26 direkt dem entsprechenden Modul 32 übergeben oder von dem Modul 32 durch die Übergabeeinrichtung 14 aufgenommen werden. Die Module 32 sind über Aufnahmen (nicht dargestellt) lösbar an der Einfassung 12 angebracht. Die Module 32 können daher während des Betriebs des Übergabeeinrichtung 14 von der Einfassung 12 entfernt werden. Die Module 32 umfassen Kartenmagazine, in welchen unbearbeitete Karten 18 bevorratet werden und die Karten 18 vereinzelt von der Übergabeeinrichtung 14 entnommen werden können, oder Kartenmagazine, in welchen die fertig bearbeiteten Karten 18 durch die Übergabeeinrichtung 14 abgelegt werden. Zudem können auch Magazine für die Aufnahme von fehlerhaften Karten 18 vorgesehen sein. Weiter umfassen die Module 32 Druckstationen, in welchen Karten 18 bzw. Sicherheits- oder Identifikationsgegenstände 18 bedruckt werden. Die Module 32 umfassen sowohl Kodierstationen, in denen Magnetstreifen von Karten 18 kodiert werden, als auch Kodierstationen, in denen Mikrochips von Karten 18 kodiert werden. Die Module 32 umfassen auch Kontrollstationen, in welchen die zumindest zum Teil bearbeiteten Karten 18 geprüft werden. Auch umfassen die Module 32 Stationen in denen die Karten 18 mit haptischen Merkmalen, wie z.B. einer Erhebung oder Vertiefung, versehen werden. Die Module 32 können aber auch Module 32 umfassen, die andere Bearbeitungen durchführen, wie beispielsweise das Aufbringen von Laserbeschriftungen auf den Karten 18.

Bei der Bearbeitung der Karten 18 in dem System 10 wird zuerst eine Karte 18 aus einem Kartenmagazin durch die Übergabeeinrichtung 14 entnommen. Die Übergabeeinrichtung 14 führt diese Karte 18 einem Modul 32 zu, in welchem eine erste Bearbeitung erfolgt. Anschließend wird die Karte 18 von der Übergabeeinrichtung 14 wieder aufgenommen und entweder einem weiteren Modul 32 zur Bearbeitung oder zur Kontrolle zugeführt. Die Karte 18 wird solange den entsprechenden Modulen 32 zu- und wieder abgeführt, bis die Karte 18 vollständig bearbeitet und geprüft wurde. Anschließend wird die eine Karte 18 einem Kartenmagazin zugeführt, in dem die fertigbearbeiteten und kontrollierten Karten 18 gesammelt werden. Während der Bearbeitung der einen Karte 18 nimmt die Übergabeeinrichtung 14 andere Karten 18 aus dem Kartenmagazin auf. Diese Karten 18 werden abhängig von der Verfügbarkeit der Module 32, durch die Übergabeeinrichtung 14 anderen Modulen 32 zugeführt, so dass sämtliche Module 32 eine Bearbeitung und/oder Kontrolle durchführen, und die Karten 18 ohne zwischenzeitliche Wartezeiten bearbeitet werden. Dabei erfolgt die Reihenfolge der Bearbeitungs- und/oder Kontrollschritte der jeweiligen Karten 18 in einer vorher festgelegten Reihenfolge oder in einer Reihenfolge, bei der zumindest ein Bearbeitungs- und/oder Kontrollschritt festgelegt ist und die anderen Bearbeitungs- und/oder Kontrollschritte variabel erfolgen, oder aber in einer vollkommen variablen Reihenfolge der Bearbeitungs- und/oder Kontrollschritte.

In einer Ausführungsvariante sind in einem System 10 zumindest zwei Modulgruppen vorgesehen, mit denen zumindest zwei unterschiedliche Produktionslose bearbeitet werden. Die erste und zweite Modulgruppe können jeweils separate Kartenmagazine, Druckstationen, Kodierstationen und Kontrollstationen umfassen, so dass das erste und das zweit Produktionslos unabhängig voneinander bearbeitet werden können. Die Übergabeeinrichtung 14 kann dabei zum Beispiel abwechselnd eine Karte 18 des ersten Produktionsloses und eine Karte 18 des zweiten Produktionsloses übergeben.

In einer weiteren Ausführungsvariante sind in einem System zumindest zwei Modulgruppen vorgesehen, mit denen zumindest zwei unterschiedliche Produktionsloses bearbeitet werden. Dabei können die erste und die zweite Modulgruppe zum Beispiel gemeinsame Kartenmagazine, Druckstationen, Kodierstationen und Kontrollstationen umfassen. Für das erste Produktionslos kann zudem eine Station vorgesehen sein, in der die Karten 18 zum Beispiel nach der Kodierung mit haptischen Merkmalen versehen werden. Die Karten 18 des zweiten Produktionsloses überspringen diesen Bearbeitungsschritt und werden nach dem Kodieren der Kontrolistation zugeführt.

In einer weiteren Ausführungsvariante sind in einem System zumindest zwei Modulgruppen vorgesehen, mit denen zumindest zwei unterschiedliche Produktionsloses bearbeitet werden. Auch hier umfassen die erste und zweite Modulgruppe gemeinsame Stationen, wie zum Beispiel ein gemeinsames Kartenmagazin und eine gemeinsame Kontrollstation. Die Druckstationen und die Kodierstationen, also Stationen in denen länger dauernde Bearbeitungsschritte ausgeführt werden, können jeweils separat vorgesehen sein. Dabei ist es ferner möglich, dass die Druckstation und die Kodierstation einer Modulgruppe nach dem Abarbeiten des ersten Produktionsloses auch für die Bearbeitung des zweiten Produktionsloses verwendet werden.

Somit kann das System, durch das Hinzufügen eines oder mehrere Module auf einfache Art und Weise für die parallele Bearbeitung unterschiedlicher Produktionslose umgerüstet / aufgerüstet werden.

Um die Bearbeitungszeit für bestimmte Karten 18 zu bestimmen, wird ein Testlauf mit einer bestimmten Anzahl von Karten 18 durchgeführt. Die aufgenommenen Zeiten werden für die Ermittlung der Gesamt-Bearbeitungszeit oder zur Optimierung des Prozessablaufs des Systems 10 verwendet.

Die Einfassung 12 weist ferner eine schließbare Öffnung 34 auf. Die schließbare Öffnung dient dazu fehlerhafte Karten 18, die von der Übergabeeinrichtung 14 fallengelassen oder von den Modulen 32 ausgeworfen wurden, aus dem Raum R1 zu entfernen. Weiterhin ermöglicht die schließbare Öffnung 34 den Zugang zu der Übergabeeinrichtung 14 für Wartungsarbeiten, Reparaturen oder für den Austausch von Teilen der Übergabeeinrichtung 14. In dem Raum R1 können auch Behälter (nicht dargestellt) angeordnet sein, die fehlerhafte Karten 18 aufnehmen. Werden zwei Behälter verwendet, werden die fehlerhaften Karten 18 bei dem Ausleeren des einen Behälters, in den jeweils anderen übergeben. Eine geeignete Erkennungsvorrichtung erkennt dabei das Vorhandensein der beiden Behälter bzw. das Nicht-Vorhandensein des einen Behälters. An der Einfassung 12 ist zudem eine Schnittstelleneinrichtung 30 angebracht, die aus einer Tastatur, über die das Bedienpersonal die Steuerung der Übergabeeinrichtung 14 (in Fig. 6 nicht dargestellt) und der Module 32 ändern und eingeben kann, einem Bildschirm, der Informationen anzeigt, und einer Steuereinheit der Schnittstelleneinrichtung 30 besteht.

Das System 10 umfasst weiter geeignete Erkennungsvorrichtungen, mittels derer die Übergabeeinrichtung 14 oder die Steuerung erkennt, dass sich Module 32 an der Einfassung 12 befinden. Ferner wird erkannt, um welches Modul 32 es sich dabei handelt. Wird während des Betriebs der Übergabeeinrichtung 12 ein Modul 32 von der Einfassung 12 entfernt, so veranlasst die Steuerung der Übergabeeinrichtung 14 die Übergabeeinrichtung 14 dazu, die Karte 18, welche zu diesem Modul 32 geführt werden soll, an ein Modul 32 zu übergeben, welches dieselben Bearbeitungs- und/oder Kontrollschritte durchführt und das an einer anderen Stelle an der Einfassung 12 angeordnet ist.

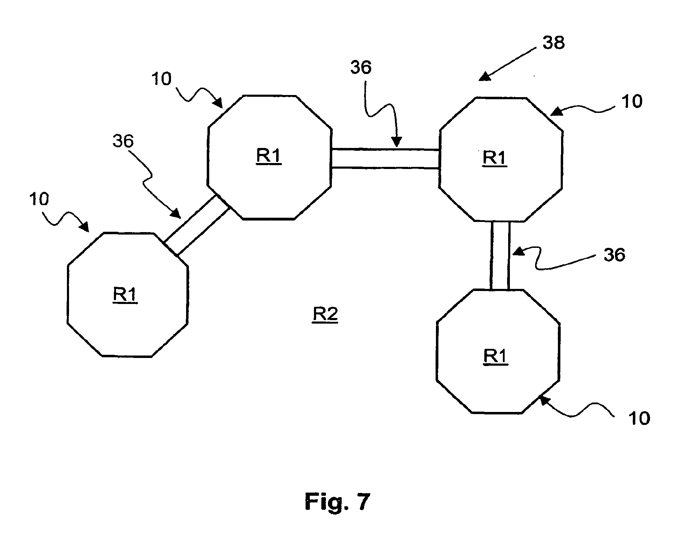

Fig. 7 zeigt einen Systemverbund 38 der aus vier Systemen 10 besteht. Die einzelnen Systeme 10 sind dabei über Transportvorrichtungen 36 miteinander verbunden. Zumindest sind immer zwei Systeme 10 des Systemverbunds 38 miteinander verbunden, so dass Karten 18 von einem System 10 über die Transportvorrichtungen 36 zu einem in der Reihe der Systeme 10 als letztes angeordnetes übergeben werden kann. In anderen Ausführungsformen bilden zwei Systeme 10 einen Systemverbund 38. Es können aber auch eine beliebige Anzahl von Systemen 10 einem Systemverbund 38 angehören. Des Weiteren kann ein System 10 zentral in dem Systemverbund 38 angeordnet sein und die Karten an die weiteren Systeme 10 übergeben. In einer Ausführungsform erfolgt in diesem zentralen System 10 lediglich eine Kontrolle bzw. ein Bestimmen des Bearbeitungsstatus der Karten 18, so dass in Abhängigkeit davon, welche Bearbeitungsschritte noch erforderlich sind, und der Auslastung der anderen Systeme 10, die Übergabe zu den jeweiligen Systemen 10 erfolgt. In einer weiteren Ausführung finden in den einzelnen Systemen 10 des Verbunds nur gleiche Bearbeitungsschritte statt, beispielsweise werden in einem System 10 die Karten 18 bedruckt und in einem anderen System 10 erfolgt nur die Kodierung eines Chips der Karten 18.

## Patentansprüche

1. System (10) zum Bearbeiten von Sicherheits- oder Identifikationsgegenständen (18), mindestens umfassend:
- wenigstens eine Übergabeeinrichtung (14), welche dazu ausgebildet ist, mindestens einen Sicherheits- oder Identifikationsgegenstand (18) aufzunehmen und wieder abzugeben, wobei der Sicherheits- oder Identifikationsgegenstand (18) durch die Übergabeeinrichtung (14) in einem mehrdimensionalen Raum bewegt wird,
- wenigstens ein Modul (32), wobei das wenigstens eine Modul (32) ein Bearbeitungsmodul ist,
- eine zum Steuern der Übergabeeinrichtung (14) dienende Steuerung, **gekennzeichnet durch**
- eine Einfassung (12) mit einer zumindest teilweise geschlossenen Mantelfläche, wobei die Mantelfläche
- zumindest den Raum (R1) umgibt, in dem die mindestens eine Übergabeeinrichtung (14) die Sicherheits- oder Identifikationsgegenstände (18) bewegt, so dass der Raum (R1), in dem die Sicherheits- oder Identifikationsgegenstände (18) von der Übergabeeinrichtung (14) bewegt werden, und ein die Einfassung (12) umgebender Raum (R2) räumlich voneinander getrennt sind, und
- Öffnungen (26) aufweist, **durch** die die mindestens eine Übergabeeinrichtung (14) die Sicherheits- oder Identifikationsgegenstände (18) aus dem umgebenden Raum (R2) aufnimmt und an den umgebenden Raum (R2) abgibt, und **durch** die Öffnungen (26) die Zu- und/oder Abführung der Sicherheits- oder Identifikationsgegenstände (18) zu/von den Modulen (32) erfolgt, und wobei
- das wenigstens eine Modul (32) an der Mantelfläche in dem die Einfassung (12) umgebenden Raum (R2) angeordnet ist.

2. System (10) nach Anspruch 1, **dadurch gekennzeichnet, dass** die Einfassung (12) Aufnahmen aufweist zur Aufnahme und Halterung der Module (32), die auf der der Übergabeeinrichtung (14) gegenüberliegenden Seite angeordnet sind und sich im die Einfassung (12) umgebenden Raum (R2) befinden, und/oder wobei die Übergabeeinrichtung (14) dazu ausgebildet ist, das Vorhandensein von Modulen (32) an den Öffnungen (26) der Einfassung (12) mittels geeigneter Erkennungseinrichtungen zu erkennen.

3. System (10) nach einem der vorangegangenen Ansprüche, **dadurch gekennzeichnet, dass** mehrere Module (32) zur Aufnahme, Bevorratung, Bearbeitung und Kontrolle von Sicherheits- oder Identifikationsgegenständen (18) an unterschiedlichen Öffnungen (26) der Einfassung (12) angeordnet sind, und/oder das System (10) eine Schnittstelleneinrichtung (30) umfasst, die mit der Steuerung der Übergabeeinrichtung (14) und den Modulen (32) in Verbindung steht, und durch die die Übergabeeinrichtung (14) und die Module (32) steuerbar sind, und/oder mehrere gleiche Module (32), die dieselben Bearbeitungsschritte ausführen, an der Einfassung (12) angebracht sind, wobei die Module (32) von der Einfassung (12) auch während des Betriebs der Übergabeeinrichtung (14) von der Einfassung (12) lösbar sein können, und/oder die Einfassung (12) relativ zu einer Öffnung (26), durch welche ein Sicherheits- oder Identifikationsgegenstand (18) von einem Modul (32) zu der Übergabeeinrichtung (14) oder umgekehrt bewegt wird, mindestens eine weitere Öffnung (26) aufweist, durch die ein Sicherheits- oder Identifikationsgegenstand (18) von der Übergabeeinrichtung (14) zu dem einen Modul (32) oder umgekehrt bewegt wird.

4. System (10) nach einem der vorangegangenen Ansprüche, **dadurch gekennzeichnet, dass** die Module (32) auch von der Steuerung zu steuern sind.

5. System (10) nach einem der Ansprüche 1 bis 4, **dadurch gekennzeichnet, dass** die Grundfläche der Einfassung (12) eine runde Form oder die Form eines geschlossenen Polygons aufweist, und/oder die Einfassung (12) geneigte oder senkrechte Wände und/oder eine schließbare Öffnung (34) aufweist.

6. System (10) nach einem der vorangegangenen Ansprüche, **dadurch gekennzeichnet, dass** die Gestalt der Öffnungen (26) der Einfassung (12) der Gestalt eines Sicherheits- oder Identifikationsgegenstands (18) annähernd entspricht

7. System (10) nach einem der vorangegangenen Ansprüche, **dadurch gekennzeichnet, dass** das wenigstens eine Modul (32) ferner ein Kontroll-, Vorrats- oder Aufnahmemodul umfasst.

8. System (10) nach einem der vorangegangenen Ansprüche, **dadurch gekennzeichnet, dass** zumindest
- ein Modul (32) ein Kartenmagazin ist, und/oder
- in einem Modul (32) ein Chip eines Sicherheits- oder Idendfikationsgegenstands (18) kodiert wird, und/oder
- in einem Modul (32) ein Magnetstreifen eines Sicherheits- oder Identifikationsgegenstands (18) kodiert wird, und/oder
- in einem Modul (32) ein Sicherheits- oder Identifikationsgegenstand (18) bedruckt wird, und/oder
- in einem Modul (32) ein Sicherheits- oder Identifikationsgegenstand (18) mit haptischen Merkmalen versehen wird, und/oder
- in einem Modul (32) die Sicherheits- oder Identifikationsgegenstände (18) vor, nach und/oder während ihrer Bearbeitung auf Fehler überprüft werden.

9. Systemverbund (38) bei dem mehrere Systeme (10) nach einem der vorangegangenen Ansprüche über Transportvorrichtungen (36) miteinander verbunden sind.

10. Verfahren zum Bearbeiten von Sicherheits- oder Identifikationsgegenständen (18), umfassend die Schritte:
- Entnehmen eines Sicherheits- oder Identifikationsgegenstandes (18) durch zumindest eine Übergabeeinrichtung (14) von einem Modul (32), in welchem der Sicherheits- oder Identifikationsgegenstand (18) vorrätig gehalten wird,
- Zuführen des einen Sicherheits- oder Identifikationsgegenstands (18) durch die Übergabeeinrichtung (14) zu einem weiteren Modul (32), in welchem ein erster Bearbeitungsschritt des Sicherheits- oder Identifikationsgegenstands erfolgt,
- Aufnehmen des Sicherheits- oder Identifikationsgegenstands (18) nach dem ersten Bearbeitungsschritt durch die Übergabeeinrichtung (14) von dem weiteren Modul (32) und Zuführen zu anderen, weiteren Modulen (32), in welchen zumindest ein zweiter Bearbeitungsschritt des Sicherheits- oder Identifikationsgegenstands erfolgt,
- Zuführen des abschließend bearbeiteten Sicherheits- oder Identifikationsgegenstands (18) durch die Übergabeeinrichtung (14) zu einem Modul (32), in welchem der Sicherheits- oder Identifikationsgegenstand (18) aufgenommen wird,
wobei der Sicherheits- oder Identifikationsgegenstand (18) durch die Übergabeeinrichtung (14) in einem mehrdimensionalen Raum (R1), der von einer Einfassung (12) mit einer zumindest teilweise geschlossenen Mantelfläche umgeben ist, bewegt wird, und der Sicherheits- oder Identifikationsgegenstand (18) durch die Übergabeeinrichtung (14) in einen die Einfassung (12) umgebenden Raum (R2), in dem die Module (32) an der Mantelfläche angeordnet sind, durch Öffnungen (26) in der Mantelfläche der Einfassung (12) den Modulen (32) zugeführt und/oder von den Modulen (32) abgeführt wird, und wobei die Bearbeitungsschritte
- in einer vorher festgelegten Reihenfolge erfolgen, oder
- zumindest ein Bearbeitungsschritt festgelegt ist und die anderen Bearbeitungsschritte variabel erfolgen, oder
- die Bearbeitungsschritte in einer variablen Reihenfolge erfolgen.

11. Verfahren nach Anspruch 10, **dadurch gekennzeichnet, dass** ein Testlauf mit einer bestimmten Zahl von Sicherheits- oder Identifikationsgegenständen (18) erfolgt, wobei die Bearbeitungs-/Kontrollzeiten aufgenommen werden, und anhand der aufgenommenen Bearbeitungs-/Kontrollzeiten die Bearbeitungszeit ermittelt wird.

12. Verfahren nach Anspruch 10 oder 11, **dadurch gekennzeichnet, dass** die Übergabeeinrichtung (14) das Vorhandensein von Modulen (32) mittels geeigneter Erkennungsvorrichtungen erkennt, und/oder dass bei Fehlen eines Moduls (32), die Übergabeeinrichtung (14) den Sicherheits- oder Identifikationsgegenstand (18) an ein an anderer Position befindliches Modul (32) übergibt, welches dieselben Bearbeitungs-/Kontrollschritte durchführt.

13. Verfahren nach einem der vorangegangenen Verfahrensansprüche, **dadurch gekennzeichnet, dass** zumindest in mindestens einem Schritt
- ein Chip eines Sicherheits- oder Identifikationsgegenstands (18) kodiert wird, und/oder
- ein Magnetstreifen eines Sicherheits- oder Identifikationsgegenstands (18) kodiert wird, und/oder
- ein Sicherheits- oder Identifikationsgegenstand (18) bedruckt wird, und/oder
- ein Sicherheits- oder Identifikationsgegenstand (18) mit haptischen Merkmalen versehen wird, und/oder
- die Sicherheits- oder Identifikationsgegenstände (18) vor, nach und/oder während ihrer Bearbeitung auf Fehler überprüft werden.

## Claims

1. System (10) for processing security or identification objects (18), at least comprising:
- at least one transfer device (14), which is realized to receive and redeliver at least one security or identification object (18), the security or identification object (18) being moved by the transfer device (14) in a multi-dimensional space,
- at least one module (32), the at least one module (32) being a processing module,
- a controller that serves to control the transfer device (14), **characterized by**
- an enclosure (12) having an at least partially closed periphery, the periphery
- at least surrounding the space (R1) in which the at least one transfer device (14) moves the security or identification objects (18), such that the space (R1) in which the security or identification objects (18) are moved by the transfer device (14) and a space (R2) surrounding the enclosure (12) are spatially separated from each other, and
- having openings (26), through which the at least one transfer device (14) receives the security or identification objects (18) from the surrounding space (R2) and re-delivers them to the surrounding space (R2), and the delivery and/or discharge of the security or identification objects (18) to/from the modules (32) being effected through the openings (26), and
- the at least one module (32) being arranged on the periphery, in the space (R2) surrounding the enclosure (12).

2. System (10) according to Claim 1, **characterized in that** the enclosure (12) has receivers for receiving and carrying the modules (32), which are arranged on the side opposite the transfer device (14) and are located in the space (R2) surrounding the enclosure (12), and/or the transfer device (14) being realized to detect the presence of modules (32) at the openings (26) of the enclosure (12) by means of suitable detection devices.

3. System (10) according to either one of the preceding claims, **characterized in that** a plurality of modules (32), for receiving, holding in stock, processing and inspecting security or identification objects (18), are arranged at differing openings (26) of the enclosure (12), and/or the system (10) comprises an interface device (30), which is connected to the controller of the transfer device (14) and to the modules (32), and by means of which the transfer device (14) and the modules (32) can be controlled, and/or a plurality of like modules (32), which execute the same processing steps, are mounted on the enclosure (12), the modules (32) of the enclosure (12) being detachable from the enclosure (12) even while the transfer device (14) is in operation, and/or the enclosure (12), relative to an opening (26) through which a security or identification object (18) is moved from a module (32) to the transfer device (14) or vice versa, having at least one further opening (26), through which a security or identification object (18) is moved from the transfer device (14) to the one module (32) or vice versa.

4. System (10) according to any one of the preceding claims, **characterized in that** the modules (32) can also be controlled by the controller.

5. System (10) according to any one of Claims 1 to 4, **characterized in that** the base of the enclosure (12) has a round shape or the shape of a closed polygon, and/or the enclosure (12) has sloped or vertical walls and/or a closable opening (34).

6. System (10) according to any one of the preceding claims, **characterized in that** the shape of the openings (26) of the enclosure (12) corresponds approximately to the shape of a security or identification object (18).

7. System (10) according to any one of the preceding claims, **characterized in that** the at least one module (32) additionally comprises an inspection, stockholding or receiving module.

8. System (10) according to any one of the preceding claims, **characterized in that**
- at least one module (32) is a card magazine, and/or
- in at least one module (32) a chip of a security or identification object (18) is encoded, and/or
- in at least one module (32) a magnetic strip of a security or identification object (18) is encoded, and/or
- in at least one module (32) a security or identification object (18) is printed, and/or
- in at least one module (32) a security or identification object (18) is provided with haptic features, and/or
- in at least one module (32) the security or identification objects (18) are checked for defects before, after and/or during processing thereof.

9. Composite system (38), wherein a plurality of systems (10) according to any one of the preceding claims are connected to each other via transport devices (36).

10. Method for processing security or identification objects (18), comprising the steps:
- removal of a security or identification object (18) by at least one transfer device (14) from a module (32) in which the security or identification object (18) is held in stock,
- delivery of the one security or identification object (18) by the transfer device (14) to a further module (32), in which a first processing step of the security or identification object is effected,
- after the first processing step, receiving of the security or identification object (18) by the transfer device (14) from the further module (32) and delivery to other, further modules (32), in which at least one second processing step of the security or identification object is effected,
- delivery of the completely processed security or identification object (18) by the transfer device (14) to a module (32) in which the security or identification object (18) is received,
the security or identification object (18) being moved by the transfer device (14) in a multi-dimensional space (R1) surrounded by an enclosure (12) having an at least partially closed periphery, and the security or identification object (18) being delivered to the modules (32) and/or discharged from the modules (32) by the transfer device (14) into a space (R2) that surrounds the enclosure (12) and in which the modules (32) are arranged on the periphery, through openings (26) in the periphery of the enclosure (12), and the processing steps
- being effected in a predefined sequence, or
- at least one processing step being predefined and the other processing steps being effected in a variable manner, or
- the processing steps being effected in a variable sequence.

11. Method according to Claim 10, **characterized in that** a test run is performed with a defined number of security or identification objects (18), the processing/inspection times being recorded, and the processing time being determined on the basis of the recorded processing/inspection times.

12. Method according to Claim 10 or 11, **characterized in that** the transfer device (14) detects the presence of modules (32) by means of suitable detection devices, and/or that in the case of absence of a module (32) the transfer device (14) transfers the security or identification object (18) to a module (32) located at a different position, which performs the same processing/inspection steps.

13. Method according to any one of the preceding claims, **characterized in that**, at least in at least one step
- a chip of a security or identification object (18) is encoded, and/or
- a magnetic strip of a security or identification object (18) is encoded, and/or
- a security or identification object (18) is printed, and/or
- a security or identification object (18) is provided with haptic features, and/or
- the security or identification objects (18) are checked for defects before, after and/or during processing thereof.

## Revendications

1. Système (10) de traitement d'objets de sécurité ou d'identification (18), comprenant au moins :
- au moins un dispositif de transfert (14) qui est conçu pour recevoir au moins un objet de sécurité ou d'identification (18) et pour le délivrer à nouveau, l'objet de sécurité ou d'identification (18) étant déplacé dans un espace multidimensionnel par le dispositif de transfert (14),
- au moins un module (32), ledit au moins un module (32) étant un module de traitement,
- une commande servant à commander le dispositif de transfert (14), **caractérisé par**
- une enceinte (12) pourvue d'une surface enveloppe au moins partiellement fermée, laquelle surface enveloppe
- entourant au moins l'espace (R1) dans lequel ledit au moins un dispositif de transfert (14) déplace les objets de sécurité ou d'identification (18) de telle manière que l'espace (R1) dans lequel les objets de sécurité ou d'identification (18) sont déplacés par le dispositif de transfert (14) et un espace (R2) environnant l'enceinte (12) soient séparés l'un de l'autre spatialement et
- présentant des ouvertures (26) à travers lesquelles ledit au moins un dispositif de transfert (14) reçoit les objets de sécurité ou d'identification (18) de l'espace (R2) environnant et les délivre à l'espace (R2) environnant, et à travers lesquelles ouvertures (26) s'effectue l'amenée des objets de sécurité ou d'identification (18) aux modules (32) et/ou leur retrait des modules (32), et
- ledit au moins un module (32) étant disposé sur la surface enveloppe dans l'espace (R2) environnant l'enceinte (12).

2. Système (10) selon la revendication 1, **caractérisé en ce que** l'enceinte (12) présente des logements destinés à recevoir et maintenir les modules (32), qui sont disposés du côté opposé au dispositif de transfert (14) et se trouvent dans l'espace (R2) environnant l'enceinte (12), et/ou le dispositif de transfert (14) étant conçu pour détecter la présence de modules (32) aux ouvertures (26) de l'enceinte (12) au moyen de dispositifs de détection appropriés.

3. Système (10) selon l'une des revendications précédentes, **caractérisé en ce que** plusieurs modules (32) de réception, stockage, traitement et contrôle des objets de sécurité ou d'identification (18) sont disposés à différentes ouvertures (26) de l'enceinte (12), et/ou le système (10) comprend un dispositif d'interface (30) qui est relié à la commande du dispositif de transfert (14) et aux modules (32) et par lequel le dispositif de transfert (14) et les modules (32) peuvent être commandés, et/ou plusieurs modules (32) identiques qui exécutent les mêmes étapes de traitement, sont installés sur l'enceinte (12), les modules (32) pouvant être détachés de l'enceinte (12) même pendant le fonctionnement du dispositif de transfert (14), et/ou l'enceinte (12) présente, par rapport à une ouverture (26) à travers laquelle un objet de sécurité ou d'identification (18) est déplacé depuis un module (32) vers le dispositif de transfert (14) ou inversement, au moins une autre ouverture (26) à travers laquelle un objet de sécurité ou d'identification (18) est déplacé depuis le dispositif de transfert (14) vers ledit module (32) ou inversement.

4. Système (10) selon l'une des revendications précédentes, **caractérisé en ce que** les modules (32) peuvent aussi être commandés par la commande.

5. Système (10) selon l'une des revendications 1 à 4, **caractérisé en ce que** la surface de base de l'enceinte (12) présente une forme ronde ou la forme d'un polygone fermé, et/ou l'enceinte (12) présente des parois inclinées ou verticales et/ou une ouverture (34) pouvant être fermée.

6. Système (10) selon l'une des revendications précédentes, **caractérisé en ce que** la forme des ouvertures (26) de l'enceinte (12) correspond approximativement à la forme d'un objet de sécurité ou d'identification (18).

7. Système (10) selon l'une des revendications précédentes, **caractérisé en ce que** ledit au moins un module (32) comprend en outre un module de contrôle, de stockage ou de réception.

8. Système (10) selon l'une des revendications précédentes, **caractérisé en ce que** au moins
- un module (32) est un magasin de cartes, et/ou
- une puce d'un objet de sécurité ou d'identification (18) est codée dans un module (32), et/ou
- une piste magnétique d'un objet de sécurité ou d'identification (18) est codée dans un module (32), et/ou
- un objet de sécurité ou d'identification (18) est imprimé dans un module (32), et/ou
- un objet de sécurité ou d'identification (18) est pourvu de caractéristiques haptiques dans un module (32), et/ou
- les objets de sécurité ou d'identification (18) sont vérifiés avant, après et/ou pendant leur traitement dans un module (32) quant à la présence éventuelle de défauts.

9. Réseau de systèmes (38) dans lequel plusieurs systèmes (10) selon l'une des revendications précédentes sont reliés entre eux par des dispositifs de transport (36).

10. Procédé de traitement d'objets de sécurité ou d'identification (18), comprenant les étapes de :
- prélèvement d'un objet de sécurité ou d'identification (18) par au moins un dispositif de transfert (14) depuis un module (32) dans lequel l'objet de sécurité ou d'identification (18) est stocké,
- amenée dudit objet de sécurité ou d'identification (18) par le dispositif de transfert (14) à un autre module (32) dans lequel une première étape de traitement de l'objet de sécurité ou d'identification est exécutée,
- réception de l'objet de sécurité ou d'identification (18) après la première étape de traitement par le dispositif de transfert (14) depuis l'autre module (32) et amenée à d'autres modules (32) supplémentaires dans lesquels au moins une deuxième étape de traitement de l'objet de sécurité ou d'identification est exécutée,
- amenée de l'objet de sécurité ou d'identification (18) dont le traitement est terminé, par le dispositif de transfert (14) à un module (32) dans lequel l'objet de sécurité ou d'identification (18) est reçu,
l'objet de sécurité ou d'identification (18) étant déplacé par le dispositif de transfert (14) dans un espace multidimensionnel (R1) qui est entouré par une enceinte (12) pourvue d'une surface enveloppe au moins partiellement fermée, et l'objet de sécurité ou d'identification (18) étant amené aux modules (32) dans un espace (R2) environnant l'enceinte (12), dans lequel les modules (32) sont disposés sur la surface enveloppe, et/ou retiré des modules (32) par le dispositif de transfert (14) à travers des ouvertures (26) dans la surface enveloppe de l'enceinte (12), et
- les étapes de traitement étant exécutées dans un ordre préalablement défini, ou
- au moins une étape de traitement étant définie et les autres étapes de traitement étant exécutées de manière variable, ou
- les étapes de traitement étant exécutées dans un ordre variable.

11. Procédé selon la revendication 10, **caractérisé en ce qu'**un test est réalisé avec un certain nombre d'objets de sécurité ou d'identification (18), lors duquel les temps de traitement/contrôle sont saisis, et le temps de traitement est déterminé à l'aide des temps de traitement/contrôle saisis.

12. Procédé selon la revendication 10 ou 11, **caractérisé en ce que** le dispositif de transfert (14) détecte la présence de modules (32) au moyen de dispositifs de détection appropriés, et/ou qu'en cas d'absence d'un module (32), le dispositif de transfert (14) transmet l'objet de sécurité ou d'identification (18) à un module (32) se trouvant à une autre position, qui exécute les mêmes étapes de traitement/contrôle.

13. Procédé selon l'une des revendications de procédé précédentes, **caractérisé en ce qu'**au moins dans au moins une étape
- une puce d'un objet de sécurité ou d'identification (18) est codée, et/ou
- une piste magnétique d'un objet de sécurité ou d'identification (18) est codée, et/ou
- un objet de sécurité ou d'identification (18) est imprimé, et/ou
- un objet de sécurité ou d'identification (18) est pourvu de caractéristiques haptiques, et/ou
- les objets de sécurité ou d'identification (18) sont vérifiés avant, après et/ou pendant leur traitement quant à la présence éventuelle de défauts.
